# EUROPÄISCHE PATENTSCHRIFT

(11) **EP 3 177 821 B1**
(45) Veröffentlichungstag und Bekanntmachung des Hinweises auf die Patenterteilung: **10.07.2019**
(21) Anmeldenummer: 15745505.6
(22) Anmeldetag: 06.08.2015
(51) Int. Cl.: F02M 47/02, F02M 63/00

(54) **DROSSELEINRICHTUNG ZUM STEUERN EINER EINER KRAFTSTOFF-EINSPRITZDÜSE ZUZUFÜHRENDEN KRAFTSTOFFMENGE SOWIE EINSPRITZEINRICHTUNG**
THROTTLE DEVICE FOR CONTROLLING AN AMOUNT OF FUEL TO BE SUPPLIED TO A FUEL INJECTION NOZZLE, AS WELL AS AN INJECTION DEVICE
DISPOSITIF D'ÉTRANGLEMENT POUR COMMANDER UNE QUANTITÉ DE CARBURANT À ALIMENTER PAR UN INJECTEUR DE CARBURANT ET SYSTÈME D'INJECTION

(30) Priorität: 08.08.2014 DE 102014215749
(43) Veröffentlichungstag der Anmeldung: 14.06.2017
(73) Patentinhaber: CPT Group GmbH, 30165 Hannover (DE)
(72) Erfinder: BURKHARDT, Axel, 75417 Mühlhacker (DE); MOUVANAL, Sandeep Kumar, Kannur 670309 (IN)
(74) Vertreter: Waldmann, Georg Alexander
(86) Internationale Anmeldenummer: PCT/EP2015/068129
(87) Internationale Veröffentlichungsnummer: WO 2016/020469

(56) Entgegenhaltungen:
- EP-A1- 0 959 243
- EP-A2- 0 778 411
- EP-A2- 1 296 055
- EP-A2- 2 206 912
- WO-A1-2015/165725
- WO-A1-2016/005180
- DE-A1-102013 224 404
- DE-C1- 19 859 592

## Beschreibung

Die Erfindung betrifft eine Drosseleinrichtung, mit der vorbestimmte Kraftstoffmengen zu einer Kraftstoff-Einspritzdüse zugeführt werden können. Weiter betrifft die Erfindung eine Einspritzeinrichtung, die eine solche Drosseleinrichtung aufweist.

Solche Drosseleinrichtungen und Einspritzeinrichtungen sind aus dem Stand der Technik bekannt, zum Beispiel aus der EP 2 206 912 A2.

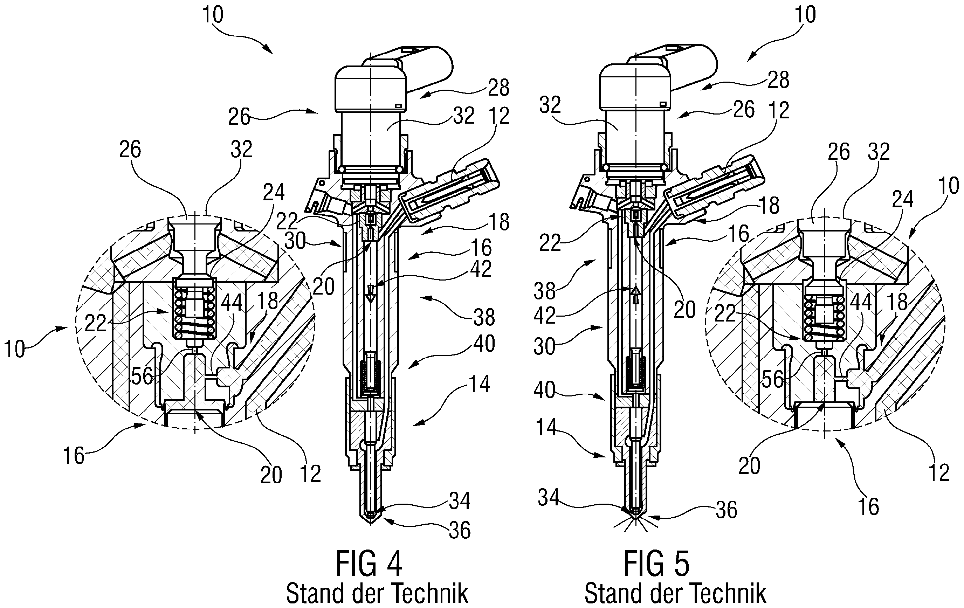

Beispielweise zeigen die Fig. 4 und Fig. 5 eine solche bekannte Einspritzeinrichtung mit darin angeordneter Drosseleinrichtung.

Eine in den Fig. 4 und 5 gezeigte Einspritzeinrichtung 10 ist dazu vorgesehen, Kraftstoff 12, der zuvor mit einem hohen Druck beaufschlagt worden ist, in einen nicht gezeigten Brennraum einzuspritzen. Die Einspritzeinrichtung 10 weist dazu eine Kraftstoff-Einspritzdüse 14 auf, zu der über eine Drosseleinrichtung 16 der mit Druck beaufschlagte Kraftstoff 12 zugeführt wird.

Die in den Fig. 4 und Fig. 5 eingekreisten Bereiche zeigen die Drosseleinrichtung 16 im größeren Detail. Die Drosseleinrichtung 16 weist eine Zuführeinrichtung 18 auf, mit der der mit Druck beaufschlagte Kraftstoff 12 zu einem Steuerraum 20 zugeführt werden kann. Von dem Steuerraum 20 zweigt weiter eine Abführeinrichtung 22 ab, über die Kraftstoff 12 aus dem Steuerraum 20 wieder abfließen kann.

In der Abführeinrichtung 22 ist ein Ventil 24 angeordnet, mit dem die Abführeinrichtung 22 geschlossen werden kann. Fig. 4 zeigt das Ventil 24 in geschlossenem Zustand, in Fig. 5 ist das Ventil im geöffneten Zustand gezeigt. Das Ventil 24 wird über eine Aktoreinrichtung 26 betätigt, die in einem Abschlusselement 28 angeordnet ist, welche ein Gehäuse 30, in dem die Kraftstoff-Einspritzdüse 14 und die Drosseleinrichtung 16 angeordnet sind, abschließt.

Die Aktoreinrichtung 26 weist häufig einen Piezostapel 32 auf, dessen Hub zur Betätigung des Ventils 24 verwendet werden kann. Ist der Piezostapel 32 in Ruheposition, gezeigt in Fig.4, das heißt die piezoelektrischen Elemente in dem Piezostapel 32 sind nicht ausgedehnt, ist das Ventil 24 geschlossen. Dadurch ist der Steuerraum 20 mit sehr hohem Druck beaufschlagt und schließt über diesen Druck eine Ventilnadel 34, die an der Kraftstoff-Einspritzdüse 14 angeordnet ist. Dadurch werden Einspritzöffnungen 36 geschlossen und es tritt kein Kraftstoff 12 aus der Einspritzeinrichtung 10 in den Brennraum ein.

In Fig. 5 betätigt der Piezostapel 32 über seinen Hub das Ventil 24, so dass dieses sich öffnet und Kraftstoff 12 aus der Abführeinrichtung 22 herausfließen kann. Der Steuerraum 20 wird somit entlastet und die Ventilnadel 34 geöffnet. Somit kann Kraftstoff 12 aus den Einspritzöffnungen 36 in den Brennraum eintreten.

Die Fig. 4 und Fig. 5 zeigen bekannte Aufbauten einer Einspritzeinrichtung 10, bei der die Aktoreinrichtung 26 außerhalb des Gehäuses 30 als separates Bauteil angeordnet ist.

Bei neueren Entwicklungen soll nun die Aktoreinrichtung, insbesondere der Piezostapel, im Inneren des Gehäuses der Einspritzeinrichtung angeordnet werden. Im Betrieb heizt sich der Piezostapel auf und gibt die so erzeugte Arbeitswärme an das Gehäuse und die in der Umgebung angeordneten Bauelemente der Einspritzeinrichtung ab. Da Kraftstoff, der zu der Kraftstoff-Einspritzdüse geleitet wird, in diesem Bereich vorbeifließt, wird die Arbeitswärme automatisch an den Kraftstoff abgegeben. Die Arbeitswärme wird so von dem Kraftstoff in Richtung auf die Kraftstoff-Einspritzdüse weitertransportiert. Aufgrund dieses thermischen Effektes tritt die Problematik auf, dass sich die Einspritzeinrichtung immer weniger öffnet und somit sukzessive weniger Kraftstoff in den Brennraum eingespritzt wird.

Aufgabe der Erfindung ist es daher, eine Anordnung vorzuschlagen, mit der die Kraftstoff-Einspritzmenge trotz Erwärmung des Kraftstoffes weitgehend konstant gehalten werden kann.

Diese Aufgabe wird mit einer Drosseleinrichtung mit den Merkmalen des Anspruches 1 gelöst.

Eine Einspritzeinrichtung, die die Drosseleinrichtung aufweist, ist Gegenstand des nebengeordneten Anspruches.

Vorteilhafte Ausgestaltungen der Erfindung sind Gegenstand der abhängigen Ansprüche.

Eine Drosseleinrichtung zum Steuern einer einer Kraftstoff-Einspritzdüse zuzuführenden Kraftstoffmenge weist einen Steuerraum zum Sammeln des Kraftstoffes und eine Zuführeinrichtung zum Zuführen des Kraftstoffes zum dem Steuerraum in einer Hauptströmungsrichtung auf. Die Zuführeinrichtung weist eine Zulaufdrossel zum Reduzieren des Kraftstoffes in der Hauptströmungsrichtung auf, wobei die Zulaufdrossel eine Länge L_{Z} aufweist. Die Länge L_{Z} der Zulaufdrossel ist so ausgewählt, dass ein im Betrieb durch die Zulaufdrossel strömender Kraftstoff in einer turbulenten Strömung durch die Zulaufdrossel strömt.

Die Zulaufdrossel ist dazu vorgesehen, einen Druck des Kraftstoffes in Strömungsrichtung hin vorteilhaft zu reduzieren. Beispielsweise herrscht vor der Zulaufdrossel ein Druck zwischen 1800 bar und 2200 bar und nach der Zulaufdrossel ein Druck zwischen 1200 bar und 1600 bar.

In Untersuchungen wurde herausgefunden, dass sich während des Betriebs einer Einspritzeinrichtung und somit bei der Entstehung von Arbeitswärme der Bereich um die Drosseleinrichtung immer stärker erwärmt. Der vorbeifließende Kraftstoff nimmt diese Arbeitswärme auf und leitet sie in Richtung auf die Kraftstoff-Einspritzdüse weiter.

Weiter wurde durch Untersuchungen ermittelt, dass der Druck in dem Steuerraum über die Betriebszeit ansteigt, ohne dass es zu einem Druckabbau in dem Steuerraum kommt. Der Druck wirkt auf eine Oberseite der Einspritznadel. Da sich der Druck nicht mehr wie gewünscht abbaut, wirkt der Druck permanent auf die Einspritznadel, die Einspritznadel ist nicht mehr genügend beschleunigbar und kann die Kraftstoff-Einspritzdüse nicht mehr in der gewünschten Weise öffnen. Durch die Erhöhung der Temperatur des Kraftstoffes ist entsprechend ein normaler, gewünschter Druckabbau in dem Steuerraum nicht mehr möglich. Um einen gewünschten Druckabbau in dem Steuerraum wieder zu ermöglichen, wird die Zuführeinrichtung im Bereich der Zulaufdrossel so ausgebildet, dass in der Zulaufdrossel eine turbulente Strömung des Kraftstoffes erreicht wird. Der Massenstrom an Kraftstoff, der in den Steuerraum fließt, ist abhängig von einem Durchflusskoeffizienten der Zulaufdrossel. Der Durchflusskoeffizient seinerseits ist in laminaren Strömungen aufgrund von Reibungseffekten abhängig von der vorherrschenden Temperatur. Bei zunehmender Temperatur steigt daher in laminaren Strömungen der Durchflusskoeffizient und somit auch der durch die Zulaufdrossel durchgeführte Massenstrom.

Wird jedoch die Zulaufdrossel nun so ausgestaltet, dass darin eine turbulente Strömung entsteht, ergibt sich ein Durchflusskoeffizient, der über große Temperaturbereiche weitgehend konstant ist, da der Durchflusskoeffizient bei turbulenten Strömungen im Gegensatz zu dem Durchflusskoeffizient in laminaren Strömungen nicht temperaturabhängig ist.

Eine turbulente Strömung in der Zulaufdrossel kann erzielt werden, indem ihre Länge L_{z} besonders kurz ausgewählt wird. Je kürzer die Zulaufdrossel ist, desto höher ist die Reynoldszahl. Übersteigt die Reynoldszahl einen kritischen Punkt, ändert sich der Strömungsverlauf von laminar zu turbulent. Damit wird der Durchflusskoeffizient bei Übersteigen der kritischen Reynoldszahl temperaturunabhängig und der Massenfluss in den Steuerraum hinein kann konstant gehalten werden. Dadurch kann eine Druckerhöhung in dem Steuerraum durch eine unerwünschte Masseflussänderung vermieden werden.

Dadurch wird der gewünschte Druckabbau in dem Steuerraum wieder ermöglicht und die Performance der Kraftstoff-Einspritzdüse über die Betriebszeit weitgehend konstant gehalten.

Um die beschriebenen Effekte vorteilhaft zu erreichen, liegt die Länge L_{z} der Zulaufdrossel in einem Längenbereich von 0,1 mm bis 0,5 mm. Dabei ist insbesondere ein Bereich von 0,15 mm bis 0,4 mm, mehr insbesondere ein Bereich von 0,2 mm bis 0,3 mm, bevorzugt.

Erfindungsgemäß ist ein Durchmesser D_{z} der Zulaufdrossel umso kleiner ausgewählt je kleiner die Länge L_{z} der Zulaufdrossel ausgewählt ist. Durch Änderung der Länge L_{z} der Zulaufdrossel ändert sich geringfügig auch der Massenstrom, der durch die Zulaufdrossel in den Steuerraum zugeführt wird; der Massenstrom wird größer. Um diesem Effekt entgegen zu wirken, wird gleichzeitig mit der Verkürzung der Länge L_{z} der Durchmesser D_{z} der Zulaufdrossel verkleinert, so dass auch der Massenstrom verringert wird.

Beispielsweise wird bei einem Längenbereich der Zulaufdrossel von 0,4 mm bis 0,5 mm ein Durchmesser D_{z} gewählt, der in einem Bereich von 171 µm bis 176 µm liegt. In einem alternativen Beispiel wird bei einer Länge L_{z} von 0,2 mm bis 0,3 mm ein Durchmesser D_{z} im Bereich von 166 µm bis 170 µm gewählt.

Erfindungsgemäß ist eine Abführeinrichtung zum Abführen des Kraftstoffes aus dem Steuerraum vorgesehen, wobei die Abführeinrichtung so an dem Steuerraum angeordnet ist, dass der Kraftstoff entgegengesetzt zu der Hauptströmungsrichtung des Kraftstoffes in der Zuführeinrichtung in einer Abführströmungsrichtung aus dem Steuerraum abgeführt wird.

Erfindungsgemäß weist die Abführeinrichtung eine Ablaufdrossel zum Reduzieren eines Druckes des Kraftstoffes in der Abführströmungsrichtung auf, wobei die Abführeinrichtung weiter in Abführströmungsrichtung vor der Ablaufdrossel einen Ausströmbereich aufweist, wobei relativ zu einer Achse der Abführströmungsrichtung in dem Ausströmbereich eine Längsachse der Ablaufdrossel geneigt angeordnet ist.

Analog zur Zulaufdrossel ist die Ablaufdrossel dazu vorgesehen, den Kraftstoffdruck in Strömungsrichtung vorteilhaft zu reduzieren. Beispielsweise wirkt vor der Ablaufdrossel ein Druck zwischen 1200 bar und 1600 bar und nach der Ablaufdrossel ein Druck zwischen 40 bar und 80 bar.

Bei geradlinig angeordneten Ablaufdrosseln bildet sich im Wandbereich der Ablaufdrossel für gewöhnlich ein Gaspolster aus Kraftstoffdämpfen aus. Dadurch werden Reibungskräfte zwischen ausströmendem Kraftstoff und dem Wandbereich der Ablaufdrossel vermieden. Somit wird auch weitgehend verhindert, dass der turbulent in die Ablaufdrossel eintretende Kraftstoff eine laminare Form annehmen könnte. Damit wird jedoch auch gleichzeitig vermieden, dass bei sich erhöhender Temperatur der Ablaufdrossel auch ein höherer Massenstrom durch die Ablaufdrossel aus dem Steuerraum austreten könnte. Wird nun die Ablaufdrossel erfindungsgemäß geneigt angeordnet, wandert das Gaspolster aus Kraftstoffdämpfen an einen Wandbereich, so dass sich an einem dazu gegenüberliegenden Wandbereich eine Reibung zwischen dem Kraftstoff und dem Wandbereich ergibt. Dies führt zu einer laminaren Strömung in diesem Bereich. Damit kann in diesem Bereich bei einer sich erhöhenden Temperatur auch eine Erhöhung des durchströmenden Massenstromes erreicht werden. Dies trägt vorteilhaft dazu bei, dass bei einer Temperaturerhöhung der Drosseleinrichtung insgesamt der Druck in dem Steuerraum vorzugsweise konstant gehalten werden kann.

Um vorteilhaft einen Kompromiss zwischen einer optimalen Ausnutzung des zur Verfügung stehenden Bauraums und dem gewünschten zuvor genannten Effekten zu erzielen, wird vorzugsweise ein Neigungswinkel zwischen der Längsachse und der Achse der Abführströmungsrichtung des Kraftstoffes in dem Ausströmbereich gewählt, der vorzugsweise kleiner ist als 50°, insbesondere kleiner als 45°.

Bevorzugt ist die Zulaufdrossel eine nicht kavitierende Drossel. Besonders bevorzugt ist die Ablaufdrossel eine kavitierende Drossel. Das bedeutet, dass sich zumindest in einem Teilbereich des Wandbereiches der Ablaufdrossel ein Gaspolster aus Kraftstoff ausbildet.

Eine Einspritzeinrichtung zum Einspritzen von Kraftstoff in einen Brennraum weist eine Kraftstoff-Einspritzdüse zum Eindüsen des Kraftstoffes in den Brennraum sowie eine oben beschriebene Drosseleinrichtung zum Steuern einer der Kraftstoff-Einspritzdüse im Betrieb zuzuführenden Kraftstoffmenge auf.

Vorzugsweise weist die Einspritzeinrichtung ein Gehäuse mit einem oberen Bereich und einem unteren Bereich auf, wobei die Kraftstoff-Einspritzdüse und die Drosseleinrichtung in dem unteren Bereich angeordnet sind, wobei weiter eine Aktoreinrichtung zum Betätigen eines Ventils der Abführeinrichtung vorgesehen ist, wobei die Aktoreinrichtung einen Piezostapel aufweist, der gemeinsam mit der Drosseleinrichtung und der Kraftstoff-Einspritzdüse im unteren Bereich des Gehäuses in unmittelbarer Nähe zu der Drosseleinrichtung angeordnet ist, so dass im Betrieb Arbeitswärme von dem Piezostapel in die Drosseleinrichtung eingeleitet wird.

Durch die bevorzugte Anordnung des Piezostapels innerhalb des Gehäuses und somit in unmittelbarer Nähe zu der Drosseleinrichtung ist es vorteilhaft möglich, Bauraum einzusparen. Wird nun durch diese vorteilhafte Anordnung Arbeitswärme von dem Piezostapel in die Drosseleinrichtung eingeleitet, ist es besonders vorteilhaft, wenn die Drosseleinrichtung wie oben beschrieben ausgebildet ist, so dass sich der Druck in dem Steuerraum trotz der Temperaturerhöhung abbauen kann und somit eine gewünschte Beschleunigung der Einspritznadel möglich wird.

Vorteilhafte Ausgestaltungen der Erfindung werden nachfolgend anhand der beigefügten Zeichnung näher erläutert. Darin zeigt:
- Fig. 1: eine Einspritzeinrichtung zum Einspritzen von Kraftstoff in einen Brennraum;
- Fig. 2: eine Drosseleinrichtung, die in der Einspritzeinrichtung in Fig. 1 angeordnet ist und eine Zulaufdrossel und eine Ablaufdrossel aufweist; und
- Fig. 3: die Ablaufdrossel aus Fig. 2 in einem nicht geneigten Zustand und in einem geneigten Zustand.

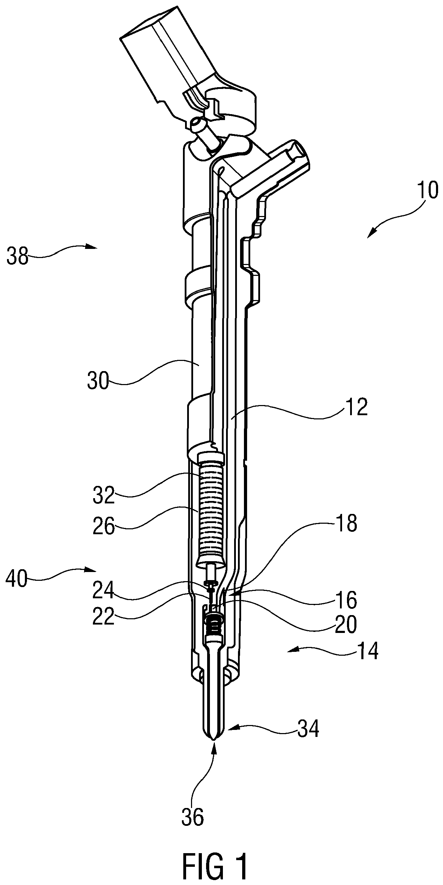

Fig.1 zeigt eine Einspritzeinrichtung 10, mit der Kraftstoff 12 in einen nicht gezeigten Brennraum eingespritzt werden kann. Die Einspritzeinrichtung 10 weist eine Kraftstoff-Einspritzdüse 14 mit einer Ventilnadel 34, eine Drosseleinrichtung 16 mit einer Zuführeinrichtung 18 und einer Abführeinrichtung 22 sowie eine Aktoreinrichtung 26 mit einem Piezostapel 32 auf. Sämtliche genannten Elemente der Einspritzeinrichtung 10 sind in einem Gehäuse 30 angeordnet, wobei das Gehäuse 30 einen oberen Bereich 38 und einen unteren Bereich 40 aufweist. Dabei sind die Aktoreinrichtung 26, die Drosseleinrichtung 16 und die Kraftstoff-Einspritzdüse 14 gemeinsam im unteren Bereich 40 angeordnet. Dabei befindet sich die Aktoreinrichtung 26 mit dem Piezostapel 32 in unmittelbarer Nähe zu der Drosseleinrichtung 16, so dass Arbeitswärme von dem Piezostapel 32 direkt in die Drosseleinrichtung 16 eingeleitet werden kann.

Um negativen Auswirkungen dieser Wärmeeinleitung entgegen wirken zu können ist die Drosseleinrichtung 16 mit einer besonderen Geometrie ausgebildet.

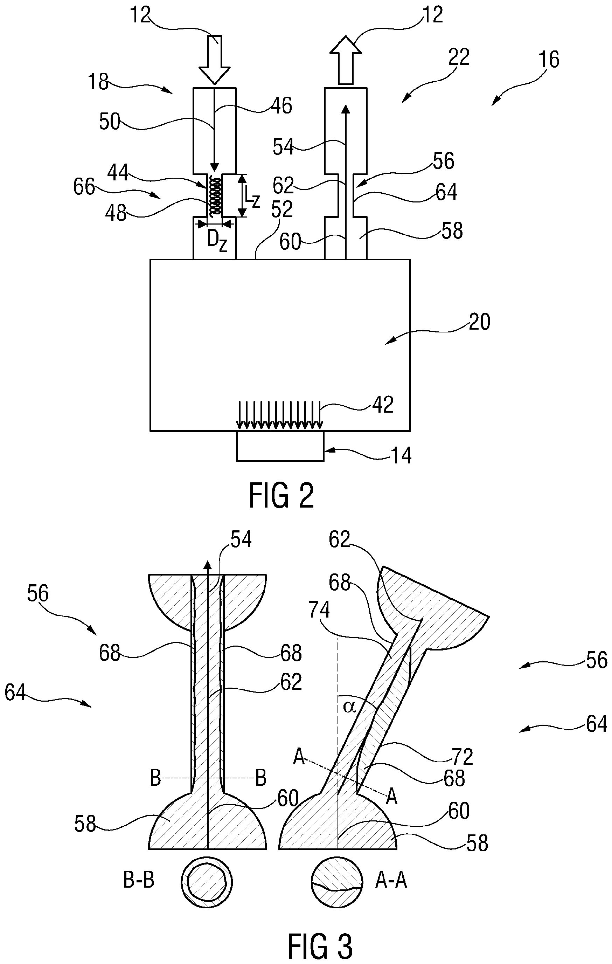

Fig. 2 zeigt eine Detailansicht auf die Drosseleinrichtung 16. Die Drosseleinrichtung 16 weist einen Steuerraum 20 auf, in dem mit Druck beaufschlagter Kraftstoff 12 gespeichert wird, um mit diesem Druck entlang einer Kraftrichtung 42 die Kraftstoff-Einspritzdüse 14 geschlossen zu halten. Der Kraftstoff 12 wird über eine Zuführeinrichtung 18 zu dem Steuerraum 20 zu- und über eine Abführeinrichtung 22 aus dem Steuerraum 20 abgeführt. Der in dem Steuerraum 20 vorherrschende Druck sollte nach Möglichkeit in einem gewünschten Bereich konstant bleiben.

Die Zuführeinrichtung 18 weist eine Zulaufdrossel 44 auf. Der Kraftstoff 12 fließt durch die Zuführeinrichtung 18 und auch somit durch die Zulaufdrossel 44 in einer Hauptströmungsrichtung 46 in den Steuerraum 20. Über die Zulaufdrossel 44 wird der Druck in dem Kraftstoff 12 von beispielsweise 2000 bar auf beispielsweise etwa 1800 bar abgesenkt. Eine Länge L_{z} der Zulaufdrossel 14 ist so ausgewählt, dass sich eine möglichst hohe Reynoldszahl ergibt und somit eine turbulente Strömung 48 erzielt werden kann. In einer turbulenten Strömung 48 ist der Durchflusskoeffizient, der direkt den Massenstrom des Kraftstoffes 12 beeinflusst, temperaturunabhängig, so dass eine erhöhte Zufuhr von Kraftstoff 12 in den Steuerraum 20 durch eine Temperaturerhöhung - beispielsweise durch Abfuhr von Arbeitswärme des benachbarten Piezostapels 32 - vermieden werden kann. Beispielsweise weist die Zulaufdrossel 44 eine Länge L_{Z} in einem Längenbereich von 0,1 mm bis 0,5 mm auf.

Bei einer kurzen Länge L_{z} vergrößert sich der Massenstrom des Kraftstoffes 12 geringfügig, so dass erfindungsgemäß ein Durchmesser D_{z} der Zulaufdrossel 44 angepasst wird.

Liegt beispielsweise die Länge L_{Z} in einem Bereich von 0,4 mm bis 0,5 mm, ist ein Durchmesser D_{Z} in einem Bereich von 171 µm bis 176 µm günstig. In einem weiteren Beispiel kann die Länge L_{Z} auch in einem Bereich von 0,2 mm bis 0,3 mm liegen, wobei in diesem Fall ein Durchmesser D_{Z} in einem Bereich von 161 µm bis 170 µm günstig ist.

Wie in Fig. 2 weiter zu sehen ist, ist an dem Steuerraum 20 eine Abführeinrichtung 22 angeordnet, durch die Kraftstoff 12 aus dem Steuerraum 20 abgeführt werden kann. Die Abführeinrichtung 22 ist dabei an einer gleichen Stirnseite 52 des Steuerraumes 20 angeordnet wie die Zuführeinrichtung 18. Dadurch wird der Kraftstoff 12 entgegengesetzt zu der Hauptströmungsrichtung 76 in eine Abführstromungsrichtung 54 aus dem Steuerraum 20 abgeführt.

Auch die Abführeinrichtung 22 weist eine Drossel in Form einer Ablaufdrossel 56 auf. Mit dieser kann entlang der Abführströmungsrichtung 54 der Druck in dem Kraftstoff 12 reduziert werden, beispielsweise von etwa 1600 bar vor der Ablaufdrossel 56 auf etwa 80 bar nach der Ablaufdrossel 56.

Neben der Ablaufdrossel 56 weist die Abführeinrichtung 22 an dem Steuerraum 20 angeordnet einen Ausströmbereich 58 auf, in den der aus dem Steuerraum 20 ausströmende Kraftstoff 12 zunächst eintritt, bevor er die Ablaufdrossel 56 erreicht.

Der Druck im Steuerraum 20 wird durch das Drosselverhältnis von Zulaufdrossel 44 und Ablaufdrossel 56 bestimmt und ist damit direkt abhängig von dem jeweiligen Durchflusskoeffizienten der beiden Drosseln 44, 56. Die Durchflusskoeffizienten werden nun beeinflusst, um zu vermeiden, dass sich der Druck im Steuerraum 20 soweit aufbaut, dass sich die Kraftstoff-Einspritzdüse 14 nicht mehr richtig öffnen kann.

In Fig. 3 ist zu sehen, dass die Ablaufdrossel 56 in zwei alternativen Ausgestaltungen vorliegen kann.

Die linke Darstellung zeigt dabei eine nicht erfindungsgemäße Ablaufdrossel 56, die entlang der Abführströmungsrichtung 54 geradlinig angeordnet ist. Das bedeutet, relativ zu einer Achse 60 der Abführströmungsrichtung 54 in dem Ausströmbereich 58 verläuft eine Längsachse 12 der Ablaufdrossel 56 koaxial.

Erfindungsgemäß jedoch ist die Ablaufdrossel 56 an dem Ausströmbereich 58 geneigt angeordnet, das bedeutet, die Längsachse 62 verläuft geneigt zu der Achse 60 der Abführströmungsrichtung 54 in dem Ausströmbereich 58. Ein Neigungswinkel α ist dabei vorteilhaft kleiner als 50° und mehr vorteilhaft kleiner als 45°. Dadurch kann trotz der Neigung der Ablaufdrossel 56 weiterhin ein geringer Bauraum zur Anordnung der Drosseleinrichtung 16 ausreichen.

Die Wirkung der Neigung der Ablaufdrossel 56 ist in Fig. 3 veranschaulicht.

Die Ablaufdrossel 56 wird als kavitierende Drossel 64 betrieben, im Gegensatz zu der Zulaufdrossel 44, die als nicht kavitierende Drossel 60 betrieben wird. Kavitierend bedeutet dabei, dass sich an einem Wandbereich 68 der Ablaufdrossel 56 ein Gaspolster ausbildet. Das Gaspolster befindet sich in einer nicht geneigten Ablaufdrossel 56, gezeigt in der linken Abbildung in Fig. 3, Querschnittsansicht B-B, umlaufend am gesamten Wandbereich 68 der Ablaufdrossel 56.

Durch das umlaufende Gaspolster werden Reibungseffekte zwischen dem Kraftstoff 12 und dem Wandbereich 68 der Ablaufdrossel 56 verhindert. Dadurch wird die Viskositätsabhängigkeit des Massenstroms verringert oder ganz aufgehoben, und der Massenstrom, der aus der Ablaufdrossel 56 ausströmt, bleibt auch bei Temperaturerhöhung konstant.

Wird nun die Ablaufdrossel 56, wie in der Querschnittsansicht A-A in der rechten Abbildung der Fig. 3 gezeigt, geneigt angeordnet, wandert das Gaspolster zu einem ersten Teilbereich 72 des Wandbereiches 68, während ein zweiter Teilbereich 74 des Wandbereiches 68 nun in direktem Kontakt mit dem Kraftstoff 12 ist. Dadurch entstehen Reibungseffekte in der Ablaufdrossel 56 und in diesem Bereich ist der Massenfluss durch die Ablaufdrossel 56 nun temperaturabhängig. Das bedeutet, dass bei erhöhter Temperatur auch eine größere Kraftstoffmenge aus der Ablaufdrossel 56 austreten wird.

Insgesamt kann bereits durch Vorsehen einer vordefinierten Länge L_{Z} der Zulaufdrossel 44 eine bei Temperaturerhöhung unerwünschte Massenstromdifferenz nach oben vermieden werden, so dass selbst bei einem gleichbleibenden Massenstrom, der bei der Ablaufdrossel 56 abfließt, eine unerwünschte Druckerhöhung in dem Steuerraum 20 verhindert werden kann.

Dieser Effekt wird zusätzlich unterstützt, weil die Ablaufdrossel 56 geneigt angeordnet wird und in diesem Bereich dann der zuvor temperaturunabhängige Massenstrom zumindest teilweise temperaturabhängig wird und somit bei erhöhter Temperatur mehr Kraftstoff 12 aus der Ablaufdrossel 56 abfließt als bei niedrigen Temperaturen.

Beide geometrischen Maßnahmen - kurze Zulaufdrossel 44 und geneigte Ablaufdrossel 56 - tragen daher dazu bei, den Druck in dem Steuerraum 20 auch bei einer Temperaturerhöhung weitgehend konstant zu halten, um so zu ermöglichen, dass sich die Kraftstoff-Einspritzdüse 14 weiterhin wie gewünscht öffnen kann.

Insgesamt bleibt das Drosselverhältnis von Zulaufdrossel 44 und Ablaufdrossel 56 über große Temperaturbereiche gleich, sodass der Druck in dem Steuerraum konstant gehalten werden kann.

### Bezugszeichenliste

- 10: Einspritzeinrichtung
- 12: Kraftstoff
- 14: Kraftstoff-Einspritzdüse
- 16: Drosseleinrichtung
- 18: Zuführeinrichtung
- 20: Steuerraum
- 22: Abführeinrichtung
- 24: Ventil
- 26: Aktoreinrichtung
- 28: Anschlusselement
- 30: Gehäuse
- 32: Piezostapel
- 34: Ventilnadel
- 36: Einspritzöffnung
- 38: oberer Bereich
- 40: unterer Bereich
- 42: Kraftrichtung
- 44: Zulaufdrossel
- 46: Hauptströmungsrichtung
- 48: turbulente Strömung
- 50: laminare Strömung
- 52: Stirnseite
- 54: Abführströmungsrichtung
- 56: Ablaufdrossel
- 58: Ausströmbereich
- 60: Achse Abführströmungsrichtung in Ausströmbereich
- 62: Längsachse
- 64: kavitierende Drossel
- 66: nicht kavitierende Drossel
- 68: Wandbereich
- 70: Gaspolster
- 72: erster Teilbereich
- 74: zweiter Teilbereich
- L_{Z}: Länge Zulaufdrossel
- D_{Z}: Durchmesser Zulaufdrossel
- α: Neigungswinkel

## Patentansprüche

1. Drosseleinrichtung (16) zum Steuern einer einer Kraftstoff-Einspritzdüse (14) zuzuführenden Kraftstoffmenge (12),
wobei die Drosseleinrichtung (16) einen Steuerraum (20) zum Sammeln des Kraftstoffes (12) und eine Zuführeinrichtung (18) zum Zuführen des Kraftstoffes (12) zu dem Steuerraum (20) in einer Hauptströmungsrichtung (46) aufweist,
wobei die Zuführeinrichtung (18) eine Zulaufdrossel (44) zum Reduzieren eines Druckes des Kraftstoffes (12) in der Hauptströmungsrichtung (46) aufweist, wobei die Zulaufdrossel (44) eine Länge (L_{Z}) aufweist,
wobei die Länge (L_{Z}) der Zulaufdrossel (44) in einem Längenbereich von 0,1 mm bis 0,5 mm, insbesondere von 0,15 mm bis 0,4 mm, mehr insbesondere von 0,2 mm bis 0,3 mm, liegt derart, dass ein im Betrieb durch die Zulaufdrossel (44) strömender Kraftstoff (12) in einer turbulenten Strömung (48) durch die Zulaufdrossel (44) strömt,
wobei eine Abführeinrichtung (22) zum Abführen des Kraftstoffes (12) aus dem Steuerraum (20) vorgesehen ist, wobei die Abführeinrichtung (22) so an dem Steuerraum (20) angeordnet ist, dass der Kraftstoff (12) entgegengesetzt zu der Hauptströmungsrichtung (46) des Kraftstoffes (12) in der Zuführeinrichtung (18) in einer Abführströmungsrichtung (54) aus dem Steuerraum (20) abgeführt wird und welche Abführeinrichtung (22) eine Ablaufdrossel (56) zum Reduzieren eines Druckes des Kraftstoffes (12) in der Abführströmungsrichtung (54) aufweist, wobei in Abführströmungsrichtung (54) vor der Ablaufdrossel (56) ein Ausströmbereich (58) angeordnet ist, wobei relativ zu einer Achse (60) der Abführströmungsrichtung (54) in dem Ausströmbereich (58) eine Längsachse (62) der Ablaufdrossel (56) geneigt angeordnet ist, wobei ein Durchmesser (D_{Z}) der Zulaufdrossel (44) umso kleiner ausgewählt ist je kleiner die Länge (L_{Z}) der Zulaufdrossel (44) ausgewählt ist, wobei insbesondere der Durchmesser (D_{Z}) bei einer Länge (L_{Z}) von 0,4 mm bis 0,5 mm in einem Bereich von 171 µm bis 176 µm liegt und/oder wobei mehr insbesondere der Durchmesser (D_{Z}) bei einer Länge (L_{Z}) von 0,2 mm bis 0,3 mm in einem Bereich von 166 µm bis 170 µm liegt.

2. Drosseleinrichtung (16) nach Anspruch 1,
**dadurch gekennzeichnet, dass** ein Neigungswinkel (α) zwischen der Längsachse (62) und der Achse (60) der Abführströmungsrichtung (54) des Kraftstoffes (12) in dem Ausströmbereich (58) kleiner als 50°, insbesondere kleiner als 45°, ist.

3. Drosseleinrichtung (16) nach einem der Ansprüche 1 bis 2,
**dadurch gekennzeichnet, dass** die Zulaufdrossel (44) eine nicht kavitierende Drossel (66) ist und/oder dass die Ablaufdrossel (56) eine kavitierende Drossel (64) ist.

4. Einspritzeinrichtung (10) zum Einspritzen von Kraftstoff (12) in einen Brennraum, aufweisend
eine Kraftstoff-Einspritzdüse (14) zum Eindüsen des Kraftstoffes (12) in den Brennraum, und
eine Drosseleinrichtung (16) nach einem der Ansprüche 1 bis 3 zum Steuern einer der Kraftstoff-Einspritzdüse (14) im Betrieb zuzuführenden Kraftstoffmenge (12).

5. Einspritzeinrichtung (10) nach Anspruch 4, **dadurch gekennzeichnet, dass** die Einspritzeinrichtung (10) ein Gehäuse (30) mit einem oberen Bereich (38) und einem unteren Bereich (40) aufweist, wobei die Kraftstoff-Einspritzdüse (14) und die Drosseleinrichtung (16) in dem unteren Bereich (40) angeordnet sind, wobei weiter eine Aktoreinrichtung (26) zum Betätigen eines Ventils (24) der Abführeinrichtung (22) vorgesehen ist, wobei die Aktoreinrichtung (26) einen Piezostapel (32) aufweist, der gemeinsam mit der Drosseleinrichtung (16) und der Kraftstoff-Einspritzdüse (14) im unteren Bereich (40) des Gehäuses (30) in unmittelbarer Nähe zu der Drosseleinrichtung (16) angeordnet ist, so dass im Betrieb Arbeitswärme von dem Piezostapel (32) in die Drosseleinrichtung (16) eingeleitet wird.

## Claims

1. Throttle device (16) for controlling a fuel quantity (12) to be supplied to a fuel injection nozzle (14),
wherein the throttle device (16) has a control chamber (20) for collecting the fuel (12) and a supply device (18) for supplying the fuel (12) to the control chamber (20) in a main flow direction (46),
wherein the supply device (18) has an inlet throttle (44) for reducing a pressure of the fuel (12) in the main flow direction (46), wherein the inlet throttle (44) has a length (L_{Z}),
wherein the length (L_{Z}) of the inlet throttle (44) lies in a length range from 0.1 mm to 0.5 mm, in particular from 0.15 mm to 0.4 mm, more particularly from 0.2 mm to 0.3 mm, such that a fuel (12) flowing through the inlet throttle (44) during operation flows through the inlet throttle (44) in a turbulent flow (48),
wherein a discharge device (22) for discharging the fuel (12) from the control chamber (20) is provided, wherein the discharge device (22) is arranged at the control chamber (20) such that the fuel (12) is discharged from the control chamber (20) in a discharge flow direction (54) which is opposite to the main flow direction (46) of the fuel (12) in the supply device (18) and which discharge device (22) has an outlet throttle (56) for reducing a pressure of the fuel (12) in the discharge flow direction (54), wherein an outflow region (58) is arranged upstream of the outlet throttle (56) in the discharge flow direction (54), wherein a longitudinal axis (62) of the outlet throttle (56) is arranged so as to be inclined relative to an axis (60) of the discharge flow direction (54) in the outflow region (58),
wherein a diameter (D_{Z}) of the inlet throttle (44) is selected to be smaller the smaller the length (L_{Z}) of the inlet throttle (44) is selected to be, wherein in particular, the diameter (D_{Z}) lies in a range from 171 µm to 176 µm in the case of a length (L_{Z}) of 0.4 mm to 0.5 mm, and/or wherein more particularly the diameter (D_{Z}) lies in a range from 166 µm to 170 µm in the case of a length (L_{Z}) of 0.2 mm to 0.3 mm.

2. Throttle device (16) according to Claim 1,
**characterized in that** an angle of inclination (α) between the longitudinal axis (62) and the axis (60) of the discharge flow direction (54) of the fuel (12) in the outflow region (58) is less than 50°, in particular less than 45°.

3. Throttle device (16) according to one of Claims 1 to 2,
**characterized in that** the inlet throttle (44) is a non-cavitating throttle (66) and/or **in that** the outlet throttle (56) is a cavitating throttle (64).

4. Injection device (10) for injecting fuel (12) into a combustion chamber, having
a fuel injection nozzle (14) for injecting the fuel (12) into the combustion chamber, and
a throttle device (16) according to one of Claims 1 to 3 for controlling a fuel quantity (12) to be supplied to the fuel injection nozzle (14) during operation.

5. Injection device (10) according to Claim 4,
**characterized in that** the injection device (10) has a housing (30) with an upper region (38) and a lower region (40), wherein the fuel injection nozzle (14) and the throttle device (16) are arranged in the lower region (40), wherein furthermore, an actuator device (26) for actuating a valve (24) of the discharge device (22) is provided, wherein the actuator device (26) has a piezo stack (32) which is arranged together with the throttle device (16) and the fuel injection nozzle (14) in the lower region (40) of the housing (30) in the direct vicinity of the throttle device (16), such that, during operation, waste heat from the piezo stack (32) is introduced into the throttle device (16).

## Revendications

1. Dispositif d'étranglement (16) pour commander une quantité de carburant (12) à alimenter par un injecteur de carburant (14),
dans lequel le dispositif d'étranglement (16) présente une chambre de commande (20) pour collecter le carburant (12) et un dispositif d'alimentation (18) pour alimenter le carburant (12) à la chambre de commande (20) dans une direction d'écoulement principale (46),
dans lequel le dispositif d'alimentation (18) présente un étranglement d'arrivée (44) pour réduire une pression du carburant (12) dans la direction d'écoulement principale (46), dans lequel l'étranglement d'arrivée (44) présente une longueur (L_{Z}),
dans lequel la longueur (L_{Z}) de l'étranglement d'arrivée (44) se situe dans une plage de longueur de 0,1 mm à 0,5 mm, en particulier de 0,15 mm à 0,4 mm, plus particulièrement de 0,2 mm à 0,3 mm, de telle manière qu'un carburant (12) s'écoulant en fonctionnement à travers l'étranglement d'arrivée (44) s'écoule en un écoulement turbulent (48) à travers l'étranglement d'arrivée (44),
dans lequel il est prévu un dispositif d'évacuation (22) pour évacuer le carburant (12) hors de la chambre de commande (20), dans lequel le dispositif d'évacuation (20) est agencé à la chambre de commande (20) de telle manière que le carburant (12) soit évacué hors de la chambre de commande (20) dans une direction d'écoulement d'évacuation (54) en sens opposé à la direction d'écoulement principale (46) du carburant (12) dans le dispositif d'alimentation (18) et ledit dispositif d'évacuation (22) présente un étranglement de sortie (56) pour réduire une pression du carburant (12) dans la direction d'écoulement d'évacuation (54),
dans lequel une région d'échappement (58) est disposée avant l'étranglement de sortie (56) dans la direction d'écoulement d'évacuation (54),
dans lequel un axe longitudinal (62) de l'étranglement de sortie (56) est disposé de façon inclinée par rapport à un axe (60) de la direction d'écoulement d'évacuation (54) dans la région d'échappement (58),
dans lequel un diamètre (D_{Z}) de l'étranglement d'arrivée (44) est choisi d'autant plus petit que la longueur (L_{Z}) de l'étranglement d'arrivée (44) est choisie plus petite,
dans lequel en particulier le diamètre (D_{Z}) se situe dans une plage de 171 µm à 176 µm pour une longueur (L_{Z}) de 0,4 mm à 0,5 mm et/ou
dans lequel plus particulièrement le diamètre (D_{Z}) se situe dans une plage de 166 µm à 170 µm pour une longueur (L_{Z}) de 0,2 mm à 0,3 mm.

2. Dispositif d'étranglement (16) selon la revendication 1, **caractérisé en ce qu'**un angle d'inclinaison (□) entre l'axe longitudinal (62) et l'axe (60) de la direction d'écoulement d'évacuation (54) du carburant (12) dans la région d'échappement (58) est plus petit que 50°, en particulier plus petit que 45°.

3. Dispositif d'étranglement (16) selon une des revendications 1 à 2, **caractérisé en ce que** l'étranglement d'arrivée (44) est un étranglement sans cavitation (66) et/ou **en ce que** l'étranglement de sortie (56) est un étranglement avec cavitation (64).

4. Système d'injection (10) pour injecter du carburant (12) dans une chambre de combustion, présentant un injecteur de carburant (14) pour injecter le carburant (12) dans la chambre de combustion et un dispositif d'étranglement (16) selon l'une quelconque des revendications 1 à 3 pour commander une quantité de carburant (12) à alimenter à l'injecteur de carburant (14) en cours de fonctionnement.

5. Système d'injection (10) selon la revendication 4, **caractérisé en ce que** le système d'injection (10) présente un boîtier (30) avec une région supérieure (38) et une région inférieure (40), dans lequel l'injecteur de carburant (14) et le dispositif d'étranglement (16) sont disposés dans la région inférieure (40), dans lequel il est en plus prévu un système d'actionneur (26) pour actionner une soupape (24) du dispositif d'évacuation (22), dans lequel le système d'actionneur (26) présente un empilement piézoélectrique (32), qui est disposé avec le dispositif d'étranglement (16) et l'injecteur de carburant (14) dans la région inférieure (40) du boîtier (30) à proximité immédiate du dispositif d'étranglement (16), de telle manière qu'en fonctionnement la chaleur de travail de l'empilement piézoélectrique (32) soit transmise au dispositif d'étranglement (16).
